# EUROPEAN PATENT APPLICATION

(11) **EP 1 065 603 A2**
(43) Date of publication of application: **03.01.2001**
(21) Application number: 00305324.6
(22) Date of filing: 23.06.2000
(51) Int. Cl.: G06F 17/24, G06F 17/21

(54) **Method and apparatus for generating visual assembly instructions from text manuals**

(30) Priority: 28.06.1999 US 340795
(71) Applicant: GENERAL ELECTRIC COMPANY, Schenectady, NY 12345 (US)
(72) Inventor: Bruno, Jeanette Marie, Saratoga Springs, New York 12866 (US); Linthicum, Steven Eric, Niskayuna, New York 12309 (US); Law, Christopher Charles, Charlton, New York 12019 (US); Blue, Russell Scott, Clifton Park, New York 12065 (US)
(74) Representative: Pedder, James Cuthbert

(57) **Abstract**

Interactive assembly instructions are generated and displayed from existing text material, including drawings, using apparatus that comprises a plurality of locations of source material (12), a retrieval and generating tool (14), a display or viewing mechanism and a user interface (16). The retrieval and generating tool takes data from the plurality of source material such as text-based manuals, parts catalogues, digital pictures and models as its input, and produces electronic instructions that start with an animated, interactive, visualization of the assembly described in the text manual. A viewing mechanism in conjunction with the user interface (16) supports the user in viewing the sequence.

## Description

This invention relates to generation of interactive visual based assembly instructions from existing text manuals and, more particularly, to producing electronic instructions that start with an animated, interactive, three dimensional visualization of an assembly described in text material, including drawings.

Presentation of assembly and maintenance instructions in visual form, preferably with a three dimensional (3D) presentation to instruct or train users on the maintenance or assembly of complex machinery, such as aircraft engines, would make such instruction or training more effective over a give time period. The specialized preparation required for producing such manuals, however, can be very expensive. Much of the material needed for such visual manuals is already available in main text manuals, auxiliary text manuals, parts drawings, and assembly drawings. Some of these drawings are already in a 3D-video format. It would be advantageous to have the ability to retrieve this information from its various sources and use it to formulate an easy to use and easy to comprehend display of the required assembly or maintenance information.

Previous technology also includes an assembly hierarchy that allows the user to view a location in a sequence, but this access does not reflect the sequential nature of the assembly steps. The previous technology interface also has a mechanism for animating a sequence from a current location to the end of the sequence. Although such animations are good for review, they lack the control necessary for use as an assembly aid during the actual assembly or a maintenance operation.

According to a first aspect of the invention, there is provided a method of generating and displaying assembly procedures comprising the steps of: retrieving source material from a plurality of sources using at least one common identification number; generating a series of images of an apparatus and subassemblies of said apparatus from said source material; displaying said series of images; and interacting with said series of images in a step-by-step fashion.

Preferably, a specific series of 3D images is subsequently provided for playback at a remote location on a playback system.

According to a second aspect of the invention, there is provided a method of generating and displaying assembly procedures comprising the steps of: parsing files of main text manuals for a plurality of phrase types; selecting and building a list containing locations of at least one phrase type; rewriting the main text manual text in HTML format; generating HTML tags at locations of at least one phrase type within the main text manual text; parsing files of auxiliary text manuals; building translation tables of selected auxiliary text phrase types; generating HTML tag versions of said files of auxiliary text manuals with HTML tags; ordering a selected phrase type in assembly sequence order as derived from selected phrase types; eliminating duplicate references to a selected phrase; translating selected phrases according to said translation tables (114), so as to enable retrieval of source material that uses a translated phrase; using phrases of retrieved source material to find appropriate 3D models within a model repository; and using phrases of retrieved source material to find appropriate supporting digital pictures.

Preferably the phrase types includes key part number phrases, phrases to be highlighted and auxiliary reference phrases. The phrases of retrieved source material may comprise part numbers. The method may include the step of using the phrases of retrieved source material to generate an assembly sequence.

According to a third aspect of the invention, there is provided an apparatus for generating and displaying a sequence of visual assembly instructions from text material comprising: a tool for retrieving and generating visual assembly instructions from said text material; display apparatus for displaying said visual assembly instructions three-dimensionally; and a user interface for enabling user interaction with said visual assembly instructions.

The tool may comprise a portion of a general purpose computer.

The apparatus may include a data repository and wherein the retrieval and generating tool is adapted to employ the user interface to select predetermined key reference identifiers from predetermined portions of the text material to locate supporting graphical and text material within the data repository and to generate a sequence of visual assembly instructions based upon the material retrieved, with the sequence being in an order determined by the predetermined key reference identifiers.

The data repository may comprise text based material containing key part number phrases, phrases to be highlighted, and auxiliary reference phrases. The text based material may include main text manuals and auxiliary text manuals. The repository may include digital pictures and/or 3D models.

The retrieval and generating tool may be adapted to parse the main text manual for predetermined key part number phrases, predetermined phrases to be highlighted, and predetermined auxiliary reference phrases. It may be adapted to use the parsed key part number phrases to select predetermined data from the auxiliary text based manuals and from digital data included in the repository.

The retrieval and generation tool may be adapted to create the sequence of visual assembly instructions from the selected predetermined data and the sequence may be ordered in accordance with the data in the main assembly text manual.

The user interface may be adapted to instruct the display apparatus to display the sequence in a predetermined one of a plurality of modes and the modes may include at least one of the group consisting of normal forward speed, fast forward speed, fast backward speed, still frame mode, a slow motion mode and display of the next predetermined number of parts in a sequence.

The user interface may be adapted to instruct the display apparatus to link to web pages pertaining to a current step in the sequence.

The display apparatus may be adapted to display a subassembly feature within a sequence by showing the subassembly being assembled disjoint from its major assembly and displaying the entire subassembly being attached to the major assembly.

According to a fourth aspect of the invention, there is provided an apparatus for generating and displaying a sequence of visual assembly instructions from text material comprising: means for retrieving and generating visual assembly instructions from the text material; means for displaying the visual assembly instructions; and means for interfacing the display means with the generated assembly instructions.

Thus a preferred embodiment of the invention is directed to generating and displaying interactive assembly instructions from existing text and drawing material. The apparatus to accomplish this assembly (which term is intended to include disassembly and maintenance procedures) and display comprises a plurality of locations of source material, a retrieval and generating tool, a memory tool, a display or viewing mechanism and a user interface. The retrieval and generating tool, which may be part of a general purpose computer, takes data from a plurality of source material such as text-based manuals, parts catalogues, digital pictures and 3D models as its input data, and produces electronic instructions that start with an animated, interactive, 3D visualization of the assembly described in the input data. The apparatus also includes a viewing mechanism designed to support a user in viewing the sequence. The viewing mechanism may also be used by the end user, such as an engine mechanic, during the actual maintenance operation of, in this example, an engine. With this mechanism, the user can electronically preview the steps to be followed in performing the assembly. With the click of a mouse button or a "joy stick", the user can view related text instructions, parts catalogue pages and digital pictures for each step in the assembly sequence.

Once a sequence has been prepared, it may be recorded on a recording medium for later use. The recording medium may be played back on a unique viewing mechanism at a remote location, such as a repair depot or assembly plant.

The invention will now be described in greater detail, by way of example, with reference to the drawings, in which:-
Figure 1 is a block diagram of a preferred embodiment of the invention;
Figure 2 is a block diagram illustrating details of the source material storage of Figure 1;
Figure 3 is a flow diagram of the retrieval and display of the visual assembly instructions employed in the invention; and
Figure 4 is a block diagram of a remote visual display system usable in the invention.

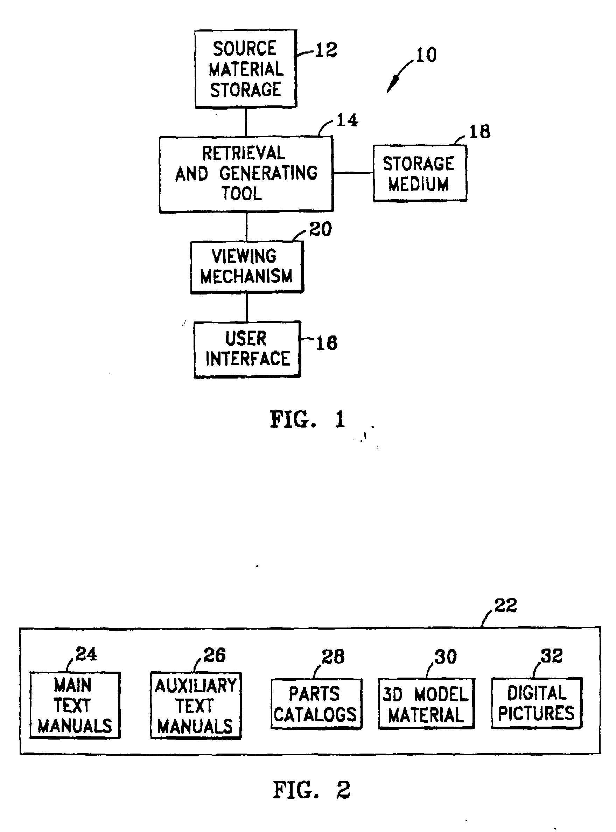

Generation and display of assembly or maintenance instructions may be accomplished using the embodiment of the invention illustrated in Figure 1. An assembly system 10 comprises source material storage 12, a retrieval and generating tool 14, a user interface 16, a storage medium 18 and a viewing mechanism 20. One or more of the parts of assembly system 10 may be implemented within a general-purpose computer. System 10 enables a user to generate a completed assembly or maintenance instruction medium for use by one or more users, such as an assembler or maintenance person, of complex apparatus which may include aircraft engines.

Source material, that may be located in storage 22, such as a print file, comprises data, as shown in Figure 2, from main text manuals 24, auxiliary text manuals 26, parts catalogs 28, 3D model material 30, and digital pictures 32. The principal source material is the main text manuals 24. Each main text manual normally has text material describing the maintenance or assembly procedure, with part number references and figures. The main text manuals provide the major text material for sequencing the assembly steps. The auxiliary text manuals contain additional text and information for translating part references from one numbering format to another. Parts catalogs 28, the 3D-model material 30 and digital pictures 32 support the main text and auxiliary text material from which the assembly sequence is generated and produced.

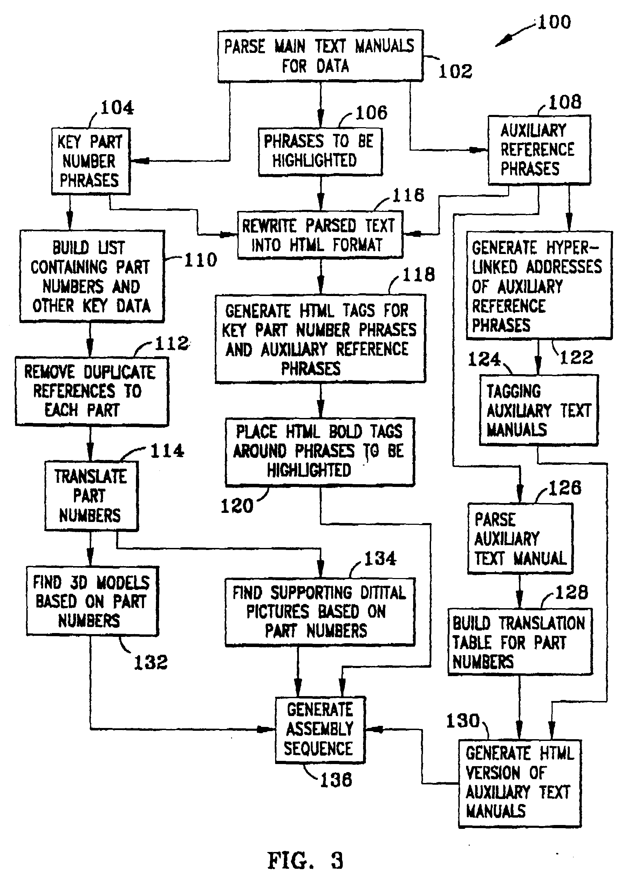

Assembly system 10 uses retrieval and generating tool 14 (Fig. 1) to retrieve the data from source material storage 22 to generate the needed sequence. Figure 3 is a flow diagram illustrating the steps of a retrieval and generation procedure 100 used by retrieval and generating system 12 (Fig. 1).

The first step in retrieval and generation procedure 100 is to parse an electronic copy of the print file for the main text manuals looking for three types of phrases 102. These phrases are described by regular expressions and include key part number phrases 104, phrases to be highlighted 106, and auxiliary reference phrases 108. From the key part number phrases 104, the retrieval and generating tool, at step 110, builds an ordered list containing the part number and other key data from the key part number phrases 104. This list is used to create a translation list at step 114, by which a list of identical parts is provided having different part numbers after removing duplicate references to each part at step 112.

As the main text is parsed, the main text manual is rewritten in HTML (HyperText Markup Language) format 116, generating, at step 118, HTML tags at the key part number phrases and auxiliary reference phrases for tagging these phrases. This enables these phrases to later be linked to other items. Putting an HTML bold tag around each of the phrases to be highlighted at step 120 makes the phrases appear bold. At step 122, hyper-linked addresses are generated from the components of the auxiliary reference phrases 108 in a manner that is compatible with step 124 of tagging the auxiliary text manuals 26 (Figure 2).

An additional step is to parse electronic copies of print files for the auxiliary text manuals, build translation tables for phrases such as part numbers at step 128 and, at step 130, generate HTML versions of these files. This enables the HTML versions to be the targets of the web hyper-links that are generated by the retrieval and generating tool. If necessary, the part list 110 in assembly sequence order (as derived from the key part number phrases and other key data) is ordered and duplicate references to each part are removed. The parts numbers are translated as per the translation tables previously built. The translation table enables the retrieval system to link source material for a single part that is referenced by different part numbers. By using such translation table the most detailed information is available to generate the desired 3D visualization.

Once all of the parts numbers relevant to the main text and their relationship to the assembly involved are known, retrieval and generating tool 14 (Figure 1) uses this information at step 132 to find the appropriate 3D material or models 30 (Figure 2) for the parts and to find, at step 134, the supporting digital pictures 32 (Figure 2) based on part numbers.

Retrieval and generating tool 14 of Figure 1 uses the retrieved part numbers to find the source material, as described above, and, at step 136 (Figure 3), to generate the assembly sequence for viewing mechanism 20. The element tying all of the various sources together is the part number generated by the text manual. There are times when the exact part number is not present on all the various sources. The sequence displays the parts as ordered in the part list. Additional key data in the parts list are put in the notes, such as torque adjustments, for each step in the sequence. Any text references or other part references in the additional key data are recorded as HTML links. The viewing mechanism system can link to web pages.

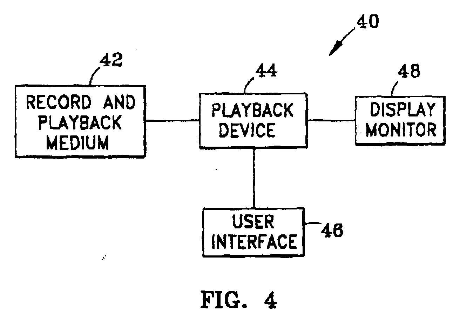

Assembly system 10 creates an organized instruction that may show an assembly of a major apparatus all the way from the part level to completed assembly or any portion thereof. The assembly system also may be used to create a systematic maintenance procedure. The completed sequence may be recorded on storage medium 18 for use at a later time, or on a separate viewing mechanism 20 as shown in Figure 4. The user (e.g., assembler or maintenance person) views the digital sequence of the instruction using viewing mechanism 20.

Normal playback starts a continuous animation of an instruction sequence. Fast forward and fast rewind functions allow the user to find the portion of an assembly or maintenance instruction of particular interest. A step function of viewing mechanism 20 or remote visual display system 40 (Figure 4) allows the user to view the instruction one step at a time. These functions of the visual display system are familiar to almost everyone and provide the control necessary to synchronize display of the instructions with required physical activity by the user.

The generation of the sequence and the display may be separated into two distinct and separate functions. Since a particular sequence may be used by numerous persons at different times and at locations remote from the source material, a prepared sequence may be recorded onto a data medium for playback at a later time on remote visual display system 40, shown in Figure 4. The record and playback medium 42 may comprise, for example, a magnetic computer disk, a data compact disc, or the like. A playback device 44 may comprise a computer, for example, having its output coupled to a display monitor 48 compatible with the display format. The playback device may also have recording capability in order that it may receive assembled data from a remote source by a transmission means such as the Internet.

The remote visual display system includes a user interface 46 that provides fast forward, fast rewind, standard forward play, standard reverse play, slow speed and instruction-by-instruction functions. This user interface allows user interfacing with the generated images, permitting the user to view the assembly or maintenance instructions at a speed commensurate with the user's needs during the assembly or maintenance procedure. This remote viewing permits the quick preparation of a maintenance procedure to be sent to Internet users throughout the world. Since the information is in a useable computer form, it is possible to encrypt or watermark the information to protect it from improper usage. This flexible transmission of the assembled data to remote locations makes it possible to provide assembly and maintenance information to users in a fast and inexpensive format.

The retrieval and generation procedure 100 uses the text material and part numbers to generate, at step 136, a 3D visualization of the maintenance or assembly sequence on a step-by-step basis. A sequence of displays is generated based upon the instructions in the text manuals. One of the key advantages of such system is that the user can select the instructions from a narrow selection within a text manual and create a directed step-by-step visualization on how to assemble a small portion of a large system. After that assembly is complete, the user can then obtain a 3D visualization of how to install the assembled sub-assembly within the major assembly.

User interface 16 of the system, shown in Figure 1, is designed to make it possible for an assembler or maintenance person to use the system with a minimum of training. For example, the user may begin by instructing the system to display the assembly instructions for assembly "1234". Once the system has gone through the retrieval and generation elements discussed above, it is ready to display the assembly instruction. Such instruction may comprise a few steps or several hundred steps. User interface 16 may have a "VCR" (video cassette recorder) type control or a "joystick" type control, allowing the user to view the entire sequence at a "normal" speed (backwards or forward), fast forward or fast reverse. However, it is likely that the user will want to have the sequence move forward or backward on a step-by-step basis. This allows the user to view one step, do that step, view the next step, perform the next step, and so forth. The user may want to move back several steps to review the work done to a certain point. At any point, the operator has the ability to display the text material for clarity. In addition, such assembly instructions often have specific tolerance and adjustment parameters that need to be strictly heeded. The display system also puts these instructions on the screen along with the 3D display of the assembly, and permits the user to zoom in and zoom out, as well as to rotate the assembly under view at any moment.

A user views the digital sequence with the display part of viewing mechanism 20 or on display monitor 48 coupled to playback device 44, shown in Figure 4. The user interface 46 is modeled after the natural and intuitive user interface found on a VCR, i.e., with fast forward, fast reverse, forward, reverse and stop buttons (not shown). The fast forward button starts a continuous animation of the sequence. The fast reverse button has similar action but moves the sequence backward in time. At any point, the stop button can be used to stop the animation of the sequence. The forward and reverse buttons allow the user to move through the sequence one step at a time. This interface is familiar to almost everyone, and provides the control necessary to synchronize the display with the physical assembly.

Two additional buttons (not shown) are added to the interface. One button provides an instruction to link to the web pages pertaining to the current step in the sequence. The other button provides an instruction to display a predetermined number of next parts in the sequence highlighted, as a preview of upcoming steps. An exemplary number of steps are twenty.

The viewing mechanism handles the subassembly feature by showing the subassembly component being assembled, disjointed from the major assembly. The whole assembly component is then attached to the major assembly as one unit.

The inventors have created a version of the invention that was run against an aircraft engine manual for an engine gearbox module used on commercial aircraft, and generated a 290-step assembly sequence.

A second version was run against certain key reports used by the assignee. The test parsed the reports (operation, sequence and part number), building a list of associations by numbers, and then ordered the list by operation and sequence. The system parsed the reports generating tags at each operation sequence heading. A 3D-assembly sequence was generated, with each sequence step hyper-linked to a report sequence heading. An additional feature of this run was that steps were dropped from the sequence when no corresponding 3D model could be found. This version was run against 13 report sets for the aircraft engine turbine modules. The data on the run are shown below:-

| **REPORT** | **SEQUENCE STEPS GENERATED** |
|---|---|
| A | 115 |
| B | 19 |
| C | 463 |
| D | 16 |
| E | 283 |
| F | 30 |
| G | 30 |
| H | 0 |
| I | 1 |
| J | 75 |
| K | 48 |
| L | 113 |
| M | 113 |

The embodiments described above have concentrated upon use of the resulting sequence for specific assembly and maintenance purposes. The technique of using unique source material to prepare a visual display of a sequence of steps may also have significant application to the field of training by visual means. Since the viewing mechanism 20 (Figure 1) or the remote visual display system 40 (Figure 4) has the ability to provide views of multiple parts of the sequence in various ways, a training use is very desirable.

## Claims

1. A method of generating and displaying assembly procedures comprising the steps of:
retrieving source material (12) from a plurality of sources using at least one common identification number;
generating (14) a series of images of an apparatus and subassemblies of said apparatus from said source material;
displaying (20) said series of images; and
interacting (16) with said series of images in a step-by-step fashion.

2. The method of claim 1 further comprising:
subsequently providing a specific series of 3D images (18) for playback at a remote location on a playback system.

3. A method of generating and displaying assembly procedures comprising the steps of:
parsing files of main text manuals (102) for a plurality of phrase types;
selecting and building a list (110) containing locations of at least one phrase type;
rewriting the main text manual text in HTML format (116);
generating HTML tags at locations of at least one phrase type within the main text manual text (120);
parsing files of auxiliary text manuals (122);
building translation tables of selected auxiliary text phrase types (128);
generating HTML tag versions of said files of auxiliary text manuals with HTML tags (120);
ordering a selected phrase type in assembly sequence order as derived from selected phrase types;
eliminating duplicate references to a selected phrase (112);
translating selected phrases according to said translation tables (114), so as to enable retrieval of source material that uses a translated phrase;
using phrases of retrieved source material to find appropriate 3D models within a model repository (132); and
using phrases of retrieved source material to find appropriate supporting digital pictures (134).

4. The method of claim 3, wherein said phrase types includes key part number phrases, phrases to be highlighted and auxiliary reference phrases.

5. The method of claim 4, wherein said phrases of retrieved source material comprise part numbers.

6. The method of claim 3, 4 or 5, including the step of using the phrases of retrieved source material to generate an assembly sequence.

7. Apparatus for generating and displaying a sequence of visual assembly instructions from text material comprising:
a tool (14) for retrieving and generating visual assembly instructions from said text material;
display apparatus (20) for displaying said visual assembly instructions three-dimensionally; and
a user interface (16) for enabling user interaction with said visual assembly instructions.

8. The apparatus of claim 7 wherein said tool comprises a portion of a general purpose computer.

9. The apparatus of claim 7 or 8 including a data repository (12) and wherein said retrieval and generating tool is adapted to employ said user interface (16) to select predetermined key reference identifiers from predetermined portions of said text material to locate supporting graphical and text material within said data repository and to generate a sequence of visual assembly instructions based upon the material retrieved, with said sequence being in an order determined by said predetermined key reference identifiers.

10. An apparatus for generating and displaying a sequence of visual assembly instructions from text material comprising:
means (14) for retrieving and generating visual assembly instructions from said text material;
means (20) for displaying said visual assembly instructions; and
means (16) for interfacing the display means with said generated assembly instructions.
